# EUROPEAN PATENT APPLICATION

(11) **EP 4 604 062 A1**
(43) Date of publication of application: **20.08.2025**
(21) Application number: 25154194.2
(22) Date of filing: 27.01.2025
(51) Int. Cl.: G06T 7/55

(54) **INFORMATION PROCESSING DEVICE, PROCESSING METHOD FOR INFORMATION PROCESSING DEVICE, AND STORAGE MEDIUM**

(30) Priority: 16.02.2024 JP 2024021929
(71) Applicant: CANON KABUSHIKI KAISHA, Tokyo 146-8501 (JP)
(72) Inventor: MATSUI, Tsukasa, Tokyo, 146-8501 (JP)
(74) Representative: Canon Europe Limited

(57) **Abstract**

An information processing device includes a subject extraction unit for extracting an area of a subject from an image to generate area information of the subject, a distance information calculation unit for calculating distance information corresponding to the image on the basis of information on a distance within the image, and an area extraction unit for using the area information of the subject generated by the subject extraction unit to extract distance information of the area of the subject from the distance information calculated by the distance information calculation unit.

## Description

### BACKGROUND OF THE INVENTION

### Field of the Invention

The present disclosure is directed to an information processing device, a processing method for an information processing device, and a storage medium.

### Description of the Related Art

In mixed reality, in which information on a virtual space is superimposed on a real space in real time and displayed to users, estimations of three-dimensional shapes in a real space are executed. A specific subject area in the real space to be superimposed on the virtual space and estimation of a three-dimensional shape of the specific subject area are estimated at high speed with a high degree of accuracy. In this way, it is possible to obtain a high degree of mixed reality.

Japanese Patent Application Laid-Open No. 2017-45283 discusses a technique, in which corresponding points are detected in an entire stereo image to estimate a depth. Based on the result, a distance from a subject to be measured to a camera is set to an estimated distance range, and the depth is measured again using the estimated distance range.

In a case where only distance information to a specific subject serving as a target to be imaged and ranged is obtained, it is difficult to extract only an area of the specific subject from entire distance information with high accuracy. For example, the distance to the subject may be close to a distance to a background portion. In such a case, even if an approximate distance to the subject is grasped in advance, it is difficult to determine the subject only with the distance information.

Due to a range finding error, such errors possibly arise that a distance to a part of the background is measured to be equal to the distance to the subject and that the distance to the subject is measured as a distance to the background. This may lead to an issue of outputting an erroneous extraction result. The erroneous extraction result includes a background area, or does not include the subject area that should be included originally.

### SUMMARY OF THE INVENTION

The present invention is directed to obtain distance information of a subject area with high accuracy.

According to an aspect of the present invention, there is provided an information processing device as specified in claims 1 to 12. According to a second aspect of the present invention, there is provided a processing method as specified in claim 13. According to a third aspect of the present invention, there is provided a storage medium as specified in claim 14.

Further features of the present invention will become apparent from the following description of exemplary embodiments with reference to the attached drawings.

### BRIEF DESCRIPTION OF THE DRAWINGS

Fig. 1 is a block diagram illustrating an example of a functional configuration of an image capturing system.
Fig. 2 is a block diagram illustrating an example of a hardware configuration of an information processing device.
Fig. 3 is a flowchart illustrating an example of processing to be executed by the information processing device.
Fig. 4 is a block diagram illustrating an example of a functional configuration of an image capturing system.
Fig. 5 is a flowchart illustrating an example of processing to be executed by the information processing device.
Fig. 6 is a block diagram illustrating an example of a functional configuration of an image capturing system.
Fig. 7 is a flowchart illustrating an example of processing to be executed by the information processing device.
Fig. 8 is a block diagram illustrating an example of a functional configuration of an image capturing system.
Fig. 9 is a flowchart illustrating an example of processing to be executed by the information processing device.
Fig. 10 is a block diagram illustrating an example of a functional configuration of an image capturing system.
Fig. 11 is a flowchart illustrating an example of processing to be executed by the information processing device.
Fig. 12 is a block diagram illustrating an example of a functional configuration of an image capturing system.
Fig. 13 is a flowchart illustrating an example of processing to be executed by the information processing device.
Fig. 14 is a block diagram illustrating an example of a functional configuration of an image capturing system.
Fig. 15 is a flowchart illustrating an example of processing to be executed by the information processing device.

### DESCRIPTION OF THE EMBODIMENTS

Hereinafter, exemplary embodiments will be described in detail with reference to the drawings. A configuration described in each of the exemplary embodiments is a representative example, and the present disclosure is not necessarily limited to those specific configurations.

A first exemplary embodiment will now be described with reference to the drawings. In the first exemplary embodiment, a configuration only for obtaining distance information to a specific subject is adopted.

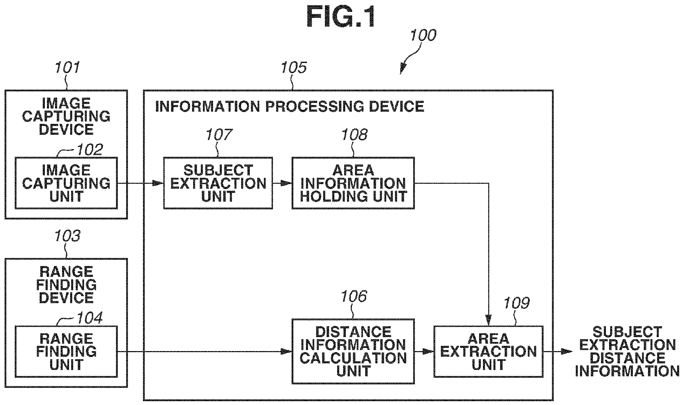

Fig. 1 is a block diagram illustrating a functional configuration example of an image capturing system 100 according to the first exemplary embodiment. As illustrated in Fig. 1, the image capturing system 100 includes an image capturing device 101, a range finding device 103, and an information processing device 105. In the image capturing system 100, the image capturing device 101 and the range finding device 103 are connected to the information processing device 105.

The image capturing device 101 includes an image capturing unit 102, and outputs an image captured by the image capturing unit 102 to the information processing device 105. The image capturing unit 102 includes a lens, which is not illustrated, and one or more image capturing elements.

The range finding device 103 includes a range finding unit 104, and outputs range finding information obtained by the range finding unit 104 to the information processing device 105. The range finding information is an example of information on a distance within the image captured by the image capturing unit 102.

The information processing device 105 includes a distance information calculation unit 106, a subject extraction unit 107, an area information holding unit 108, and an area extraction unit 109.

The distance information calculation unit 106 receives the range finding information input from the range finding device 103, and calculates distance information according to a type of the range finding information. The distance information is information on a distance from the range finding unit 104 to the subject. The distance information calculation unit 106 outputs the calculated distance information to the area extraction unit 109.

The subject extraction unit 107 receives the image input from the image capturing device 101, determines the subject under a predetermined condition, and obtains area information of the subject. For example, the subject extraction unit 107 may determine the subject by using a color or luminance of the captured image as a condition. The subject extraction unit 107 outputs the obtained area information of the subject to the area information holding unit 108.

The area information holding unit 108 holds the area information of the subject obtained by the subject extraction unit 107. The area information holding unit 108 outputs the held area information of the subject to the area extraction unit 109.

The area extraction unit 109 uses the area information of the subject, which is held in the area information holding unit 108, to extract the distance information, which has been calculated by the distance information calculation unit 106, within a range of the subject. The area extraction unit 109 then outputs the distance information, which has been extracted within the subject area, to the outside of the information processing device 105.

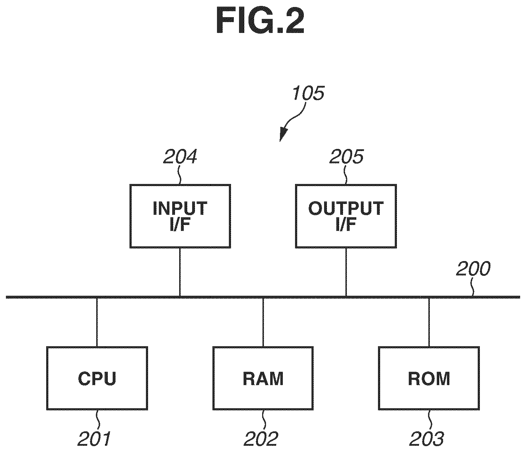

Fig. 2 is a diagram illustrating an example of a hardware configuration of the information processing device 105 illustrated in Fig. 1. The information processing device 105 includes a bus 200, a central processing unit (CPU) 201, a random access memory (RAM) 202, a read only memory (ROM) 203, an input interface (I/F) 204, and an output I/F 205.

The CPU 201 accesses the RAM 202 or the ROM 203 via the bus 200 to execute a program stored in the RAM 202 or the ROM 203, or refer to or write data.

The input I/F 204 receives the captured image and the range finding information from the image capturing device 101 and the range finding device 103, respectively, in a format that can be processed by the information processing device 105.

The output I/F 205 outputs the distance information, which has been processed by the information processing device 105, in a format that an external output device can process.

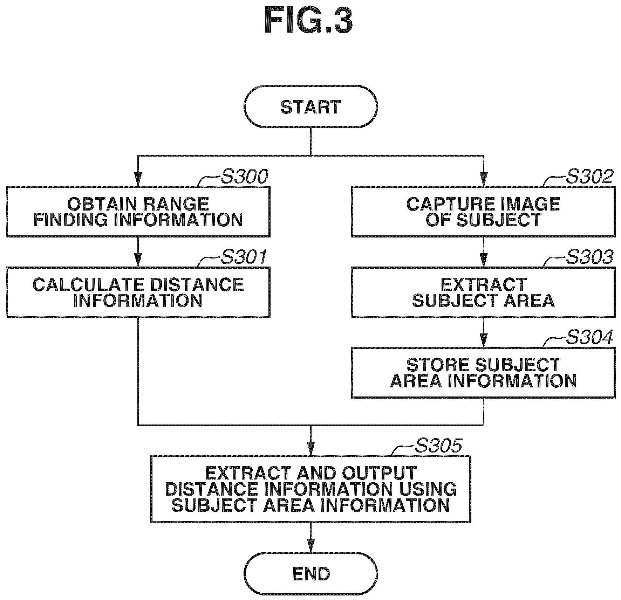

Fig. 3 is an example of a flowchart illustrating processing that is executed by the information processing device 105 in Fig. 1 to output subject extraction distance information from the captured image and the range finding information. Fig. 3 illustrates a processing method performed by the information processing device 105.

In step S300, the CPU 201 receives the range finding information, which has been obtained by the range finding device 103, via the input I/F 204. The CPU 201 then temporarily stores the received range finding information in the RAM 202 or the like.

In step S301, the distance information calculation unit 106 calculates the distance information on the basis of the range finding information obtained by the range finding device 103. The above range finding information is an example of information on the distance within the image captured by the image capturing unit 102. The above distance information corresponds to the image captured by the image capturing unit 102.

For example, the range finding unit 104 is a light detection and ranging (LiDAR) device including a laser element and a light-sensitive element, which are not illustrated. The distance information calculation unit 106 calculates distance information to a target subject on the basis of the range finding information obtained by the LiDAR device. The range finding information and the distance information described above are information on a two-dimensional area that corresponds to a two-dimensional image captured by the image capturing device 101.

At this time, the distance information calculation unit 106 may subject the distance information to projection transform and calculate the distance information in order to adjust positional deviation between the captured image and the distance information due to a difference in a viewpoint or an angle of view between the image capturing device 101 and the range finding device 103.

For example, in a case where an appropriate distance to a specific subject is grasped in advance, the distance information calculation unit 106 may calculate the distance information by using, as a valid value, only a distance within a predetermined range from the appropriate distance. At this time, the distance information calculation unit 106 may output a predetermined value, which is set in advance, in an area outside the valid value.

In step S302, the CPU 201 receives the image captured by the image capturing device 101 via the input I/F 204. The CPU 201 then temporarily stores the received image in the RAM 202 or the like.

In step S303, the subject extraction unit 107 extracts an area of the specific subject from the image captured by the image capturing unit 102 to generate and output area information of the subject. For example, in a case where the specific subject has a shape feature, the subject extraction unit 107 may hold information on the feature of the subject in advance, and determine an area having such a feature as a subject area.

For example, in a case where the specific subject has a color feature, the subject extraction unit 107 may register the color of the subject in advance, and may determine the subject area on the basis of whether the area has the pre-registered color. For example, the subject extraction unit 107 may have a function to recognize and detect the subject, and may determine the subject area on the basis of results of the recognition and the detection.

In step S304, the area information holding unit 108 stores the area information of the subject output by the subject extraction unit 107. For example, the area information holding unit 108 can store the area information of the subject in the image as is from which the subject of eight bits per pixel has been extracted. Compared to such a case, the area information holding unit 108 may set 1-bit information, such as 1 for the subject area and 0 for an area other than the subject area, per pixel in order to reduce capacity of the RAM 202 to be used. The area information holding unit 108 may store the area information of the subject as the 1-bit information.

For example, in a case where it is assumed that the subject area does not have a complicated shape, a boundary of the subject area may be grasped as an edge in order to reduce the capacity of the RAM 202 to be used, and the area information of the subject may thereby be stored. At this time, the area information of the subject may be generated by combining a plurality of straight lines, each of which is formed by connecting two pixels.

Here, a group of the steps S300 to S301 and a group of the steps S302 to S304 may be executed in parallel or may be executed sequentially from one of the groups.

In step S305, the area extraction unit 109 uses the area information of the subject stored in the area information holding unit 108 to extract the distance information of the subject area from the distance information calculated by the distance information calculation unit 106. The area extraction unit 109 then outputs subject extraction distance information. The subject extraction distance information is the distance information of the area of the specific subject. For example, in order to clearly indicate an area other than the area of the specific subject, the area extraction unit 109 may output the distance information included in the subject area as is, and may overwrite the distance information included in the area other than the subject area with a separately set value and output the distance information of such an area.

As it has been described above, the information processing device 105 according to the present exemplary embodiment can output the distance information of only the specific subject by extracting the distance information of the subject area from the calculated distance information.

A second exemplary embodiment will now be described with reference to the drawings. Hereinafter, the same components as those in the above-described first exemplary embodiment will be denoted by the same reference signs and will not be described.

In general, an image sensor of the image capturing unit 102 has higher resolution than that of a range finding sensor, such as the LiDAR device of the range finding unit 104. In particular in the subject, there is an issue in that a contour of the subject in the distance information is rough and low in accuracy when compared to a contour of the subject in image information.

In the second exemplary embodiment, the following configuration is adopted to handle such an issue. The resolution of the distance information prior to extraction of the subject is adjusted to improve the accuracy of the contour of the distance information of the subject to be eventually extracted.

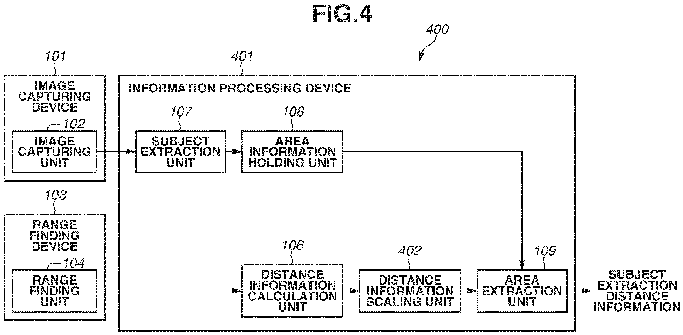

Fig. 4 is a block diagram illustrating a functional configuration example of an image capturing system 400 according to the second exemplary embodiment. The image capturing system 400 includes the image capturing device 101, the range finding device 103, and an information processing device 401.

The information processing device 401 includes the distance information calculation unit 106, the subject extraction unit 107, the area information holding unit 108, and the area extraction unit 109. The information processing device 401 further includes a distance information scaling unit 402. The distance information scaling unit 402 increases or reduces the resolution of the distance information calculated by the distance information calculation unit 106, and then outputs the distance information to the area extraction unit 109.

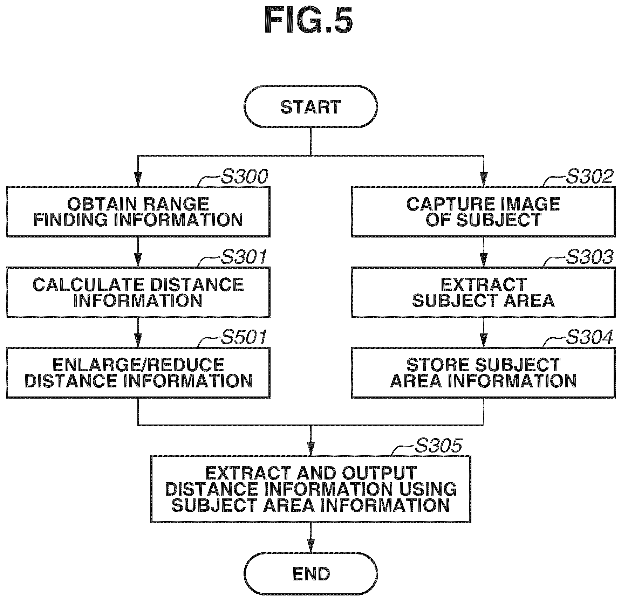

Fig. 5 is an example of a flowchart illustrating processing that is executed by the information processing device 401 to output the subject extraction distance information from the captured image and the range finding information. Fig. 5 is a flowchart illustrating a processing method by the information processing device 401.

In Fig. 5, step S501 is added to the flowchart illustrated in Fig. 3. Processing in step S501 is executed after step S301. The processing in step S305 is executed after step S501.

In step S501, the distance information scaling unit 402 increases or reduces the resolution of the distance information, which has been calculated by the distance information calculation unit 106, to predetermined resolution set in advance. As an interpolation algorithm used for scaling, a known nearest neighbor method or bilinear method may be used.

For example, there is a case where resolution of the range finding information output by the range finding device 103 is lower than the resolution of the image information output by the image capturing device 101. In such a case, the distance information scaling unit 402 may enlarge the distance information according to the resolution of the image information in order to appropriately extract the subject in the area extraction unit 109. At this time, it is desirable to match the resolution of the image information and the resolution of the distance information. However, the resolution of the image information and the resolution of the distance information may not be matched.

In step S305, the area extraction unit 109 uses the area information of the subject held by the area information holding unit 108 to extract the distance information of the subject area from the distance information, the resolution of which has been increased or reduced by the distance information scaling unit 402. The area extraction unit 109 then outputs the subject extraction distance information.

In step S305, in a case where the resolution of the image information is higher than the resolution of the distance information, the area extraction unit 109 may adjust an area of the subject extraction distance information, so as to output a result corresponding to the resolution of the distance information and thus to output only a range where both the image information and the distance information are valid.

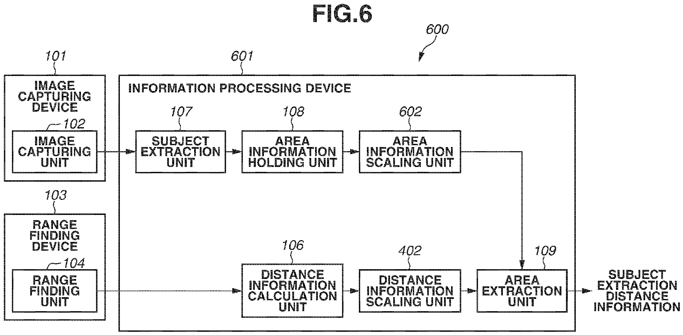

In the second exemplary embodiment, the area information of the subject may also be enlarged or reduced as illustrated in Fig. 6.

Fig. 6 is a block diagram illustrating a functional configuration example of an image capturing system 600. The image capturing system 600 includes the image capturing device 101, the range finding device 103, and an information processing device 601. The information processing device 601 is obtained by adding an area information scaling unit 602 to the information processing device 401 in Fig. 4. The area information scaling unit 602 increases or reduces the resolution of the area information of the subject stored in the area information holding unit 108, and then outputs the area information of the subject to the area extraction unit 109.

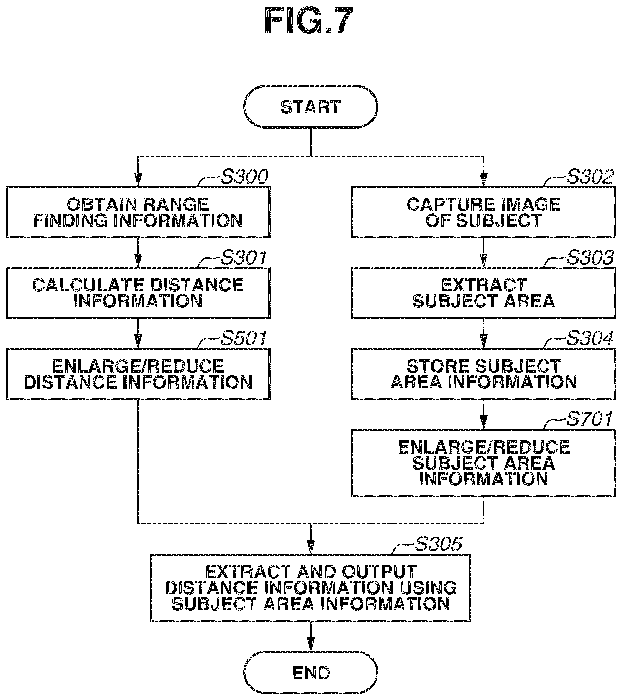

Fig. 7 is an example of a flowchart illustrating processing that is executed by the information processing device 601 to output the subject extraction distance information from the captured image and the range finding information.

In Fig. 7, step S701 is added to the flowchart illustrated in Fig. 5. Processing in step S701 is executed after step S304. The processing in step S305 is executed after step S701.

In step S701, the area information scaling unit 602 increases or reduces the resolution of the area information of the subject stored in the area information holding unit 108 to the resolution of the subject extraction distance information to be output. For example, there is a case where the resolution of the subject extraction distance information to be output does not match the resolution of the captured image. In such a case, the area information scaling unit 602 increases or reduces the resolution of the area information of the subject in a manner to match the resolution of the subject extraction distance information. The area information scaling unit 602 then outputs the subject extraction distance information to the area extraction unit 109.

In step S305, the area extraction unit 109 uses the area information of the subject, the resolution of which has been increased or reduced by the area information scaling unit 602, to extract the distance information of the subject area from the distance information, the resolution of which has been increased or reduced by the distance information scaling unit 402. The area extraction unit 109 then outputs the subject extraction distance information.

As it has been described above, even in both of the configurations illustrated in Figs. 4 and 6, the information processing devices 401 and 601 according to the present exemplary embodiment enlarge the distance information in accordance with the subject image, and then extract the distance information on the subject area. In this way, the information processing devices 401 and 601 can output the distance information in which the contour of the subject is highly accurate even in a case where the resolution of the image information is higher than the resolution of the distance information.

A third exemplary embodiment will now be described with reference to the drawings. Hereinafter, the same components as those in the above-described exemplary embodiments will be denoted by the same reference signs and will not be described.

The configuration of the second exemplary embodiment has the following issue. When the distance is calculated, the projection transform is performed in consideration of the positional difference between the image capturing device 101 and the range finding device 103. In such a case, due to erroneous calculation of a distance of a background portion other than the subject, the background portion is projected onto a subject portion, which possibly causes an error in the distance information of the subject. In the third exemplary embodiment, a configuration that handles such a problem is adopted.

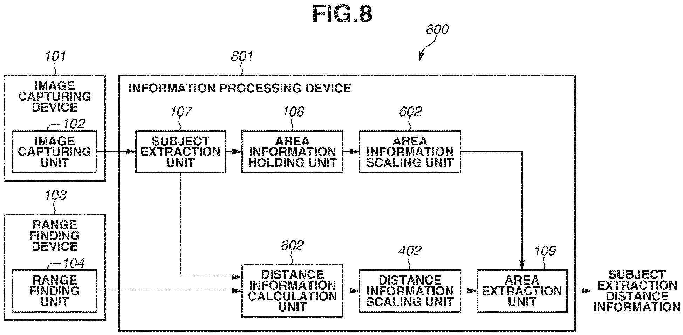

Fig. 8 is a block diagram illustrating a functional configuration example of an image capturing system 800 according to the third exemplary embodiment. The image capturing system 800 includes the image capturing device 101, the range finding device 103, and an information processing device 801. The information processing device 801 is obtained by providing, instead of the distance information calculation unit 106, a distance information calculation unit 802 to the information processing device 601 illustrated in Fig. 6. The distance information calculation unit 802 uses the area information of the subject output by the subject extraction unit 107 to select the area of the range finding information and calculate the distance information. The distance information calculation unit 802 then outputs the distance information to the distance information scaling unit 402.

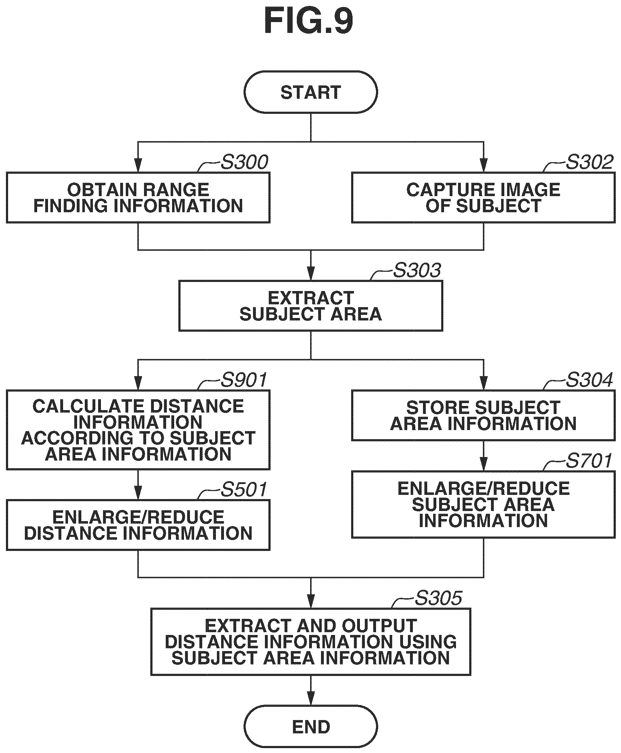

Fig. 9 is an example of a flowchart illustrating processing that is executed by the information processing device 801 to output the subject extraction distance information from the captured image and the range finding information.

In Fig. 9, step S901 is added to the flowchart in Fig. 7. After steps S300 and S302, processing in step S303 is executed. Thereafter, processing in steps S901 and S304 is executed. After step S901, the processing in step S501 is executed.

In step S901, the distance information calculation unit 802 uses the area information of the subject, which is output by the subject extraction unit 107, to select the area of the range finding information and calculate the distance information. The distance information calculation unit 802 therefore calculates and outputs the distance information from the range finding information in the subject area, while the distance information calculation unit 802 does not calculate the distance information and outputs a predetermined value in an area other than the subject area. For example, the distance information, which is output from the area other than the subject area, may have a fixed value, such as 0 or infinity, regardless of the pixel position. In a case where the projection transform processing is executed, the distance information calculation unit 802 may execute the projection transform processing by treating the distance information of the area other than the subject area as infinity. In this case, the distance information calculation unit 802 calculates the distance information by using the projection transform processing.

As it has been described above, the information processing device 801 according to the present exemplary embodiment can obtain the distance information, in which an influence of the distance information of the area other than the subject area is reduced, by using the area information of the subject obtained by extracting the subject.

A fourth exemplary embodiment will be described with reference to the drawings. Hereinafter, the same components as those in the above-described exemplary embodiments will be denoted by the same reference signs and will not be described.

In the fourth exemplary embodiment, instead of the image capturing device 101 and the range finding device 103 in the first to third exemplary embodiments, a range finding camera is used to perform block matching from an image captured by the range finding camera and calculate the distance information.

In general, there is a case where a block of the block matching becomes large. In such a case, even when a pixel of interest is in the area other than the subject area, distance information of the pixel of interest may not be correctly calculated due to matching with the subject area in the block. As a result, such an issue arises that the contour of the subject area in the distance information differs from the contour of the subject area in the captured image. In the fourth exemplary embodiment, a configuration that handles such a problem is adopted.

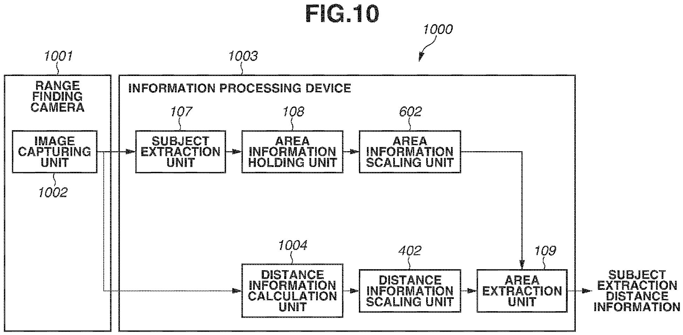

Fig. 10 is a block diagram illustrating a functional configuration example of an image capturing system 1000 according to the fourth exemplary embodiment. The image capturing system 1000 includes a range finding camera 1001 and an information processing device 1003.

The range finding camera 1001 includes an image capturing unit 1002, and outputs an image captured by the image capturing unit 1002 to the information processing device 1003.

The information processing device 1003 is obtained by providing, instead of the distance information calculation unit 106, a distance information calculation unit 1004 to the information processing device 601 illustrated in Fig. 6.

The distance information calculation unit 1004 is connected to the range finding camera 1001 that serves as the image capturing device 101 and the range finding device 103. The distance information calculation unit 1004 calculates the distance information by using an image captured by the range finding camera 1001 as the range finding information.

The subject extraction unit 107 receives the image input from the range finding camera 1001, determines the subject under a predetermined condition, and obtains the area information of the subject.

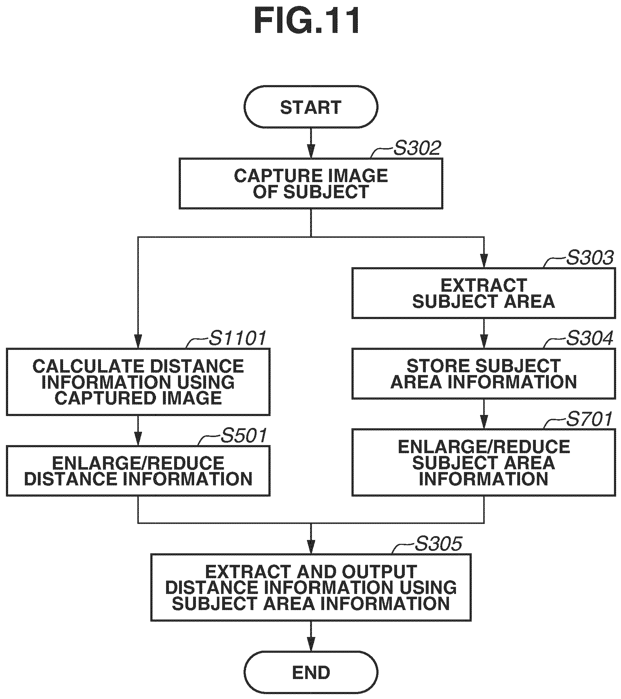

Fig. 11 is an example of a flowchart illustrating processing that is executed by the information processing device 1003 to output the subject extraction distance information from the captured image.

In Fig. 11, steps S300 and S301 are removed from the flowchart in Fig. 7, and step S1101 is added thereto.

In step S302, the CPU 201 receives the image captured by the range finding camera 1001 via the input I/F 204, and temporarily stores the received image in the RAM 202 or the like. Thereafter, processing in steps S1001 and S303 is executed. After step S1101, the processing in step S501 is executed.

In step S303, the subject extraction unit 107 extracts the subject area from the image captured by the range finding camera 1001. The subject extraction unit 107 then generates the area information of the subject.

In step S1101, the distance information calculation unit 1004 calculates the distance information by using the image captured by the range finding camera 1001. The image captured by the range finding camera 1001 is an example of information on a distance within the image captured by the image capturing unit 1002.

For example, the range finding camera 1001 is a stereo camera. The distance information calculation unit 1004 calculates the distance information by using the block matching using the principle of triangulation.

For example, the image capturing unit 1002 includes pixels, each of which has a plurality of divided photoelectric conversion units. The distance information calculation unit 1004 calculates the distance information by using the block matching for which an image plane phase difference is taken into consideration.

As it has been described above, even in a case where the range finding camera 1001 is used, the information processing device 1003 according to the present exemplary embodiment calculates the distance information by using the image obtained by the image capturing unit 1002, and then extracts the subject area. In this way, the information processing device 1003 can cancel the erroneous calculation of the distance information by the block matching, and can thus output the distance information in which the contour of the subject is highly accurate.

A fifth exemplary embodiment will now be described with reference to the drawings. Hereinafter, the same components as those in the above-described exemplary embodiments will be denoted by the same reference signs and will not be described.

In general, in image block matching, features of blocks are compared to each other, and corresponding portions are estimated. ,, There is an issue that the distance information of the subject portion cannot be calculated accurately because the subject possibly matches an object other than the subject or the background depending on an image capturing condition or a state of the subject. In the fifth exemplary embodiment, a configuration that handles such an issue is adopted.

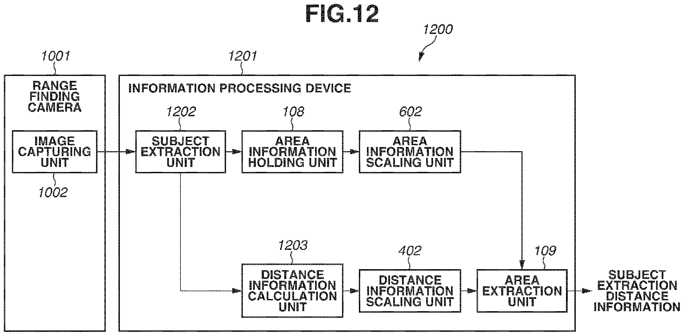

Fig. 12 is a block diagram illustrating a functional configuration example of an image capturing system 1200 according to the fifth exemplary embodiment. The image capturing system 1200 includes the range finding camera 1001 and an information processing device 1201.

The information processing device 1201 is obtained by providing, instead of the subject extraction unit 107 and the distance information calculation unit 1004, a subject extraction unit 1202 and a distance information calculation unit 1203 to the information processing device 1003 in Fig. 10.

The subject extraction unit 1202 extracts the subject area from the image captured by the range finding camera 1001. The subject extraction unit 1202 then generates the area information of the subject. In addition, the subject extraction unit 1202 extracts the image of the subject area from the image captured by the range finding camera 1001 by using the area information of the subject. The subject extraction unit 1202 outputs the extracted image as the subject extracted image. The subject extraction unit 1202 outputs the area information of the subject to the area information holding unit 108, and outputs the subject extracted image to the distance information calculation unit 1203.

The distance information calculation unit 1203 uses the subject extracted image, which has been output by the subject extraction unit 1202, as the range finding information to calculate the distance information. The distance information calculation unit 1203 then outputs the distance information to the distance information scaling unit 402.

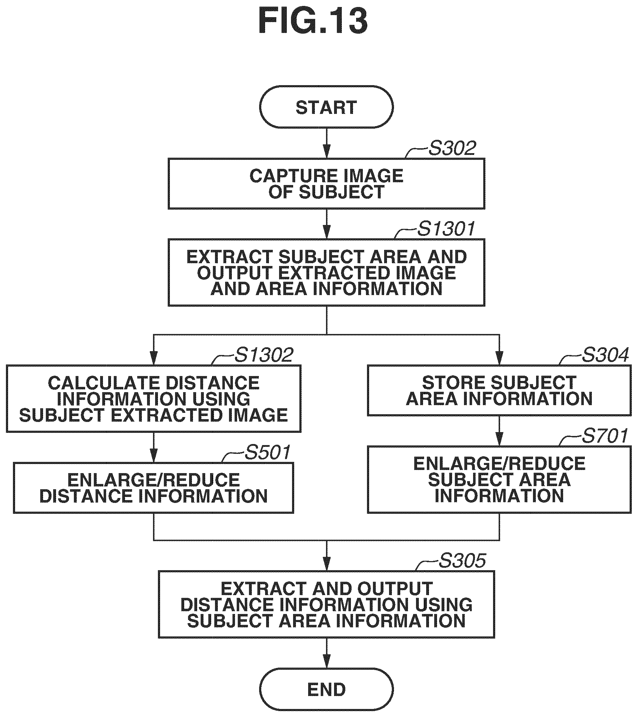

Fig. 13 is an example of a flowchart illustrating processing that is executed by the information processing device 1201 to output the subject extraction distance information from the captured image.

In Fig. 13, steps S303 and S1101 are deleted from the flowchart illustrated in Fig. 11, and steps S1301 and S1302 are added thereto. After step S302, processing in step S1301 is executed. After step S1301, processing in steps S1302 and S304 is executed. After step S1302, the processing in step S501 is executed.

In step S1301, the subject extraction unit 1202 extracts the subject area from the image captured by the range finding camera 1001 by using a predetermined method set in advance. The subject extraction unit 1202 then generates the area information of the subject. Thereafter, the subject extraction unit 1202 extracts the subject extracted image of the subject area from the image captured by the range finding camera 1101 by using the area information of the subject. For example, in the subject extracted image, a pixel value of the subject image is output as is for pixels of the subject area, and a fixed value, such as zero, is output for pixels of the area other than the subject area. The subject extraction unit 1202 outputs the area information of the subject to the area information holding unit 108, and outputs the subject extracted image to the distance information calculation unit 1203.

In step S1302, the distance information calculation unit 1203 calculates the distance information on the basis of the subject extracted image, which has been output by the subject extraction unit 1202. The distance information calculation unit 1203 then outputs the distance information to the distance information scaling unit 402.

As it has been described above, the information processing device 1201 according to the present exemplary embodiment calculates the distance information by using the subject extracted image in which the pixel value of the area other than the subject area is set to 0. In this way, the information processing device 1201 can output the distance information obtained by extracting the subject area while reducing an influence of matching between the subject and the object other than the subject.

A sixth exemplary embodiment will now be described with reference to the drawings. Hereinafter, the same components as those in the above-described exemplary embodiments will be denoted by the same reference signs and will not be described.

In general, in the image block matching, an amount of throughput is increased as the resolution or a block size of the image to be processed is increased. In the sixth exemplary embodiment, in order to handle such an increase, a configuration is adopted that the accuracy of the contour of the subject area in the distance information is maintained while the amount of throughput is reduced.

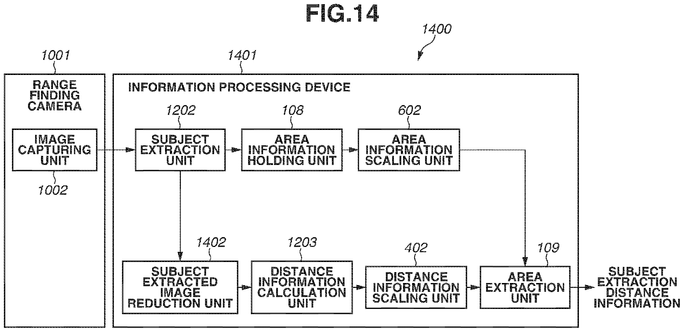

Fig. 14 is a block diagram illustrating a functional configuration example of an image capturing system 1400 according to the sixth exemplary embodiment. The image capturing system 1400 includes the range finding camera 1001 and an information processing device 1401.

The information processing device 1401 is obtained by adding a subject extracted image reduction unit 1402 to the information processing device 1201 in Fig. 12. The subject extracted image reduction unit 1402 reduces resolution of a subject extracted image output by the subject extraction unit 1202 to predetermined resolution. The subject extracted image reduction unit 1402 then outputs the subject extracted image to the distance information calculation unit 1203.

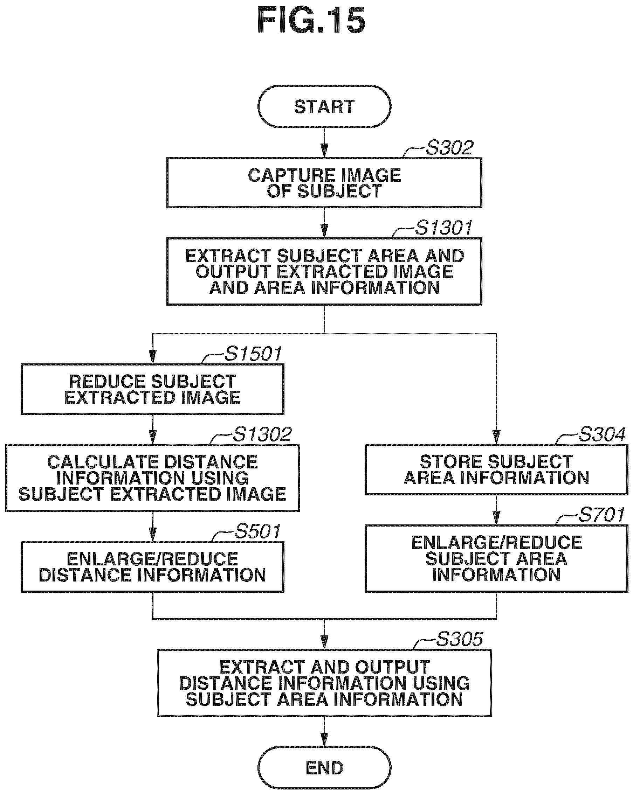

Fig. 15 is an example of a flowchart illustrating processing that is executed by the information processing device 1401 to output the subject extraction distance information from the captured image.

In Fig. 15, step S1501 is added to the flowchart in Fig. 13. After step S1301, processing in steps S1501 and S304 is executed. After step S1501, the processing in step S1302 is executed.

In step S1501, the subject extracted image reduction unit 1402 reduces the resolution of the subject extracted image, which has been output by the subject extraction unit 1202, to the predetermined resolution set in advance.

For example, the subject extracted image reduction unit 1402 determines a reduction ratio in accordance with required processing performance, a processing time, and a calculation scale. For example, when the reduction ratio is 1/2, a processing time for calculation of the distance information is suppressed to 1/2 or less.

The distance information scaling unit 402 determines an enlargement ratio of the distance information according to the reduction ratio and the resolution of the area information of the subject. For example, there is a case where the reduction ratio used by the subject extracted image reduction unit 1402 is 1/2, and the resolution of the captured image is 1/2 of the resolution of the subject extraction distance information to be output. In such a case, the enlargement ratio is doubled to cancel the reduction, and the enlargement ratio is made doubled to match output resolution. Thus, the enlargement ratio by the distance information scaling unit 402 becomes four.

In step S1302, the distance information calculation unit 1203 calculates the distance information on the basis of the subject extracted image, the resolution of which has been reduced by the subject extracted image reduction unit 1402.

As it has been described above, in the information processing device 1401 according to the present exemplary embodiment, the subject extracted image reduction unit 1402 reduces the resolution of the subject extracted image. In this way, the information processing device 1401 maintains the resolution of the area information of the subject while reducing the amount of throughput for the calculation of the distance information. As a result, the information processing device 1401 can output the distance information in which the contour of the subject is highly accurate.

According to the first to sixth exemplary embodiments, the information processing device can calculate the distance information while maintaining the high degree of accuracy of the contour of the subject area in the distance information.

The present disclosure can also be realized by the following processing. In the processing, a program that implements one or more functions in the above-described exemplary embodiments is supplied to a system or a device via a network or a storage medium. Then, one or more processors in a computer of the system or the device read and execute the program. The present disclosure can also be realized by a circuit (e.g., an application-specific integrated circuit (ASIC)) that realizes one or more functions.

The present disclosure is not limited to the exemplary embodiments described above, and various exemplary embodiments can be adopted within a scope that does not depart from the gist of the present disclosure.

According to the present disclosure, it is possible to obtain the highly accurate distance information of the subject area.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. An information processing device comprising:
subject extraction means for extracting an area of a subject from an image to generate area information of the subject;
distance information calculation means for calculating distance information corresponding to the image on the basis of information on a distance within the image; and
area extraction means for using the area information of the subject generated by the subject extraction means to extract distance information of the area of the subject from the distance information calculated by the distance information calculation means.

2. The information processing device according to claim 1, further comprising distance information scaling means for increasing or reducing resolution of the distance information calculated by the distance information calculation means,
wherein the area extraction means uses the area information of the subject generated by the subject extraction means to extract the distance information of the area of the subject from the distance information, the resolution of which has been increased or reduced by the distance information scaling means.

3. The information processing device according to claim 1, further comprising area information scaling means for increasing or reducing resolution of the area information of the subject generated by the subject extraction means,
wherein the area extraction means uses the area information of the subject, the resolution of which has been increased or reduced by the area information scaling means, to extract the distance information of the area of the subject.

4. The information processing device according to claim 2, further comprising area information scaling means for increasing or reducing resolution of the area information of the subject generated by the subject extraction means,
wherein the area extraction means uses the area information of the subject, the resolution of which has been increased or reduced by the area information scaling means, to extract the distance information of the area of the subject from the distance information, the resolution of which has been increased or reduced by the distance information scaling means.

5. The information processing device according to claim 1, wherein the distance information calculation means uses the area information of the subject generated by the subject extraction means to select information on the area of the subject in the information on the distance within the image and calculate the distance information.

6. The information processing device according to claim 5, wherein the distance information calculation means calculates the distance information by projection transform.

7. The information processing device according to claim 1, wherein the subject extraction means extracts an area of a subject from an image captured by an image capturing unit to generate area information of the subject, and
wherein information on a distance within the image is range finding information obtained by a range finding unit.

8. The information processing device according to claim 1, wherein the subject extraction means extracts an area of a subject from an image captured by a range finding camera to generate area information of the subject, and
wherein information on a distance within the image is the image captured by the range finding camera.

9. The information processing device according to claim 8, wherein the range finding camera is a stereo camera, and
wherein the distance information calculation means calculates the distance information on the basis of a triangulation method.

10. The information processing device according to claim 8, wherein the range finding camera is a camera in which each pixel has a plurality of photoelectric conversion units, and
wherein the distance information calculation means calculates the distance information on the basis of a plane phase difference.

11. The information processing device according to claim 8, wherein the subject extraction means uses the area information of the subject to extract an image of the area of the subject from the image captured by the range finding camera,
wherein the information on the distance within the image is the image of the area of the subject, and
wherein the distance information calculation means calculates the distance information on the basis of the image of the area of the subject.

12. The information processing device according to claim 11, further comprising image reduction means for reducing resolution of the image of the area of the subject extracted by the subject extraction means,
wherein the distance information calculation means calculates the distance information on the basis of the image of the area of the subject, the resolution of which has been reduced by the image reduction means.

13. A processing method for an information processing device, the processing method comprising:
extracting an area of a subject from an image to generate area information of the subject;
calculating distance information corresponding to the image on the basis of information on a distance within the image; and
using the area information of the subject generated in the extracting to extract distance information of the area of the subject from the distance information calculated in the calculating.

14. A non-transitory computer-readable storage medium storing a computer-executable program for causing a computer to perform the processing method according to claim 13.
